Europäisches Patentamt

European Patent Office

Office européen des brevets

(19)

(11) Veröffentlichungsnummer: **0 064 686**
**B1**

(12) EUROPÄISCHE PATENTSCHRIFT

(45) Veröffentlichungstag der Patentschrift:
31.07.85

(51) Int. Cl.⁴: **H 04 Q 7/04**

(21) Anmeldenummer: 82103692.8

(22) Anmeldetag: 30.04.82

(54) Nachrichtenübertragungssystem.

(30) Priorität: 07.05.81 DE 3118018
03.10.81 DE 3139408

(43) Veröffentlichungstag der Anmeldung:
17.11.82 Patentblatt 82/46

(45) Bekanntmachung des Hinweises auf die Patenterteilung:
31.07.85 Patentblatt 85/31

(84) Benannte Vertragsstaaten:
CH DE FR LI NL

(56) Entgegenhaltungen:
DE - A - 2 536 452
US - A - 3 532 985
US - A - 3 908 088
US - A - 4 129 749
US - A - 4 222 115
US - A - 4 301 530

NACHRICHTENTECHNISCHE ZEITSCHRIFT, Band 27,
Nr. 7, Juli 1974, Seiten 253-259, Berlin, DE. W. HEROLD:
"Ein Funktelephonsystem mit Codemultiplex"
INTERNATIONAL CONFERENCE ON
COMMUNICATIONS, Band 3 von 4, 14.-18. Juni 1981,
Conference Record, Seiten 44.4.1 bis 44.4.5, New York,
USA C.R. GARNIER: "The IRT 1500, a rural TDMA radio
subscriber loop system"
NEC Research and Development, No. 57, April 1980,
Seiten 80-87

(73) Patentinhaber: International Standard Electric
Corporation, 320 Park Avenue, New York New
York 10022 (US)

(84) Benannte Vertragsstaaten: CH FR LI NL

(73) Patentinhaber: Standard Elektrik Lorenz
Aktiengesellschaft, Hellmuth-Hirth-Strasse 42,
D-7000 Stuttgart 40 (DE)

(84) Benannte Vertragsstaaten: DE

(72) Erfinder: Eckert, Klaus-Dieter, Schäferstrasse 32/1,
D-7140 Ludwigsburg-Hoheneck (DE)
Erfinder: Ecklundt, Hinrich, Lichtenbergstrasse 41,
D-7140 Ludwigsburg (DE)
Erfinder: Höfgen, Günter, Marderweg 8,
D-7014 Kornwestheim (DE)
Erfinder: Kreutzer, Peter, Dreizlerstrasse 62,
D-7000 Stuttgart 75 (DE)
Erfinder: Langewellpott, Ulrich, Sulzgrieser Steige 23/5,
D-7300 Esslingen (DE)

(74) Vertreter: Graf, Georg Hugo, Dipl.-Ing. et al, c/o
Standard Elektrik Lorenz AG Patent- und Lizenzwesen
Postfach 300 929 Kurze Strasse 8,
D-7000 Stuttgart 30 (DE)

## Beschreibung

Die Erfindung bezieht sich auf ein Nachrichtenübertragungssystem mit ortsfesten Sende/Empfangsstationen und mit beweglichen Sende/Empfangsstationen, die über Funk mit den ortsfesten Stationen Nachrichten austauschen können, wobei mehrere ortsfeste Stationen von einer Leitstelle gesteuert werden, von denen wiederum mehrere mit einer Überleiteinrichtung zu einem Fernsprechwählnetz verbunden sind.

Aus dem Aufsatz »Automobil Telephone Switching System« von T. Terashima et al. in der Zeitschrift NEC Research and Development, No. 57, April 1980, auf den Seiten 80 bis 87, ist ein derartiges System bekannt. In diesem zellular aufgebauten System sind jeweils bis zu 32 ortsfeste Stationen einer Leitstelle zugeordnet, von denen bis zu 6 mit einer Überleiteinrichtung verbunden sind. Nur zwischen den Überleiteinrichtungen besteht eine direkte Verbindung untereinander. Dieses System arbeitet im Frequenzbereich bei 800 MHz mit Frequenzmultiplex als Vielfachzugriffsverfahren mit maximal 600 Kanälen im Bereich einer Leitstelle.

Nur durch hohe Frequenzstabilität der eingesetzten Baugruppen und steile Kanalfilter lassen sich Nachbarkanalstörungen vermindern, was einen relativ hohen Aufwand erfordert, ebenso wie die Vermeidung von Intermodulationsprodukten durch eine nichtlineare Amplitudencharakteristik im Empfangskanal. Dazu kommt die geringe Störfestigkeit der analogen Nachrichtenübertragung. Aus der US-A-3 532 985 ist das TDMA-Verfahren für die Nachrichtenübertragung zwischen einer Anzahl beweglicher Stationen und mit Hilfe einer festen oder beweglichen Relaisstation bekannt.

Der Erfindung liegt die Aufgabe zugrunde, ein Nachrichtenübertragungssystem der eingangs genannten Art anzugeben, das eine(n) kostengünstige(n) Herstellung und Betrieb insbesondere der beweglichen Sende/Empfangsstationen und einen flexiblen Ausbau auf eine sehr hohe Teilnehmerzahl gestattet und dabei gegenseitige Störungen und Störungen von anderen Funkdiensten bei einer sicheren Übertragung vermeidet und eine Unterdrückung von Störeinflüssen des Mehrwegeempfangs aufweist.

Die Lösung dieser Aufgabe erfolgt mit den im Anspruch 1 angegebenen Mitteln. Ausgestaltungen können den Unteransprüchen entnommen werden.

Die Erfindung hat den Vorteil, daß wegen des verwendeten TDMA-Verfahrens für den Verkehr zwischen Feststationen und Mobilstationen und den direkten Verbindungen der Leitstellen untereinander die Übergabe einer Mobilstation von einer Feststation die zu einer ersten Leitstelle gehört, zu einer Feststation, die zu einer zweiten Leitstelle gehört, so schnell erfolgt, daß keine Unterbrechung der Verbindung bei der Übergabe erfolgt. Dies ist deshalb so, weil die für die Übergabe notwendigen Maßnahmen während der nicht von der betrachteten Mobilstation belegten Zeitschlitze des Zeitmultiplexrahmens erfolgen.

Nachstehend wird die Erfindung anhand von Zeichnungen von Ausführungsbeispielen näher erläutert. Es zeigt

Fig. 1 schematisch die Ebenen des Nachrichtenübertragungssystems;

Fig. 2 schematisch die Ebene einer Leitstelle;

Fig. 3 ein Blockschaltbild einer beweglichen Sende/Empfangsstation;

Fig. 4 ein Blockschaltbild einer ortsfesten Sende/Empfangsstation;

Fig. 5 ein Schema für einen Zeitrahmen beim Zeitmultiplexverfahren;

Fig. 6 Impulsdiagramme der Spreizspektrumstechnik;

Fig. 7 Impulsdiagramme beim Auftreten von Umwegsignalen;

Fig. 8 eine Liste von Codezeichen eines m-wertigen Alphabetes;

Fig. 9 ein Blockschaltbild einer weiteren beweglichen Sende/Empfangsstation;

Fig. 10 ein Blockschaltbild einer weiteren ortsfesten Sende/Empfangsstation;

Fig. 11 ein Blockschaltbild der Signalverarbeitung im Empfänger;

Fig. 12 ein Blockschaltbild einer ersten Schaltung zur Erfassung aller Korrelationsspitzen der Synchronisationspräambel;

Fig. 13 ein Blockschaltbild einer zweiten Schaltung zur Erfassung der Korrelationsspitzen;

Fig. 14 ein Blockschaltbild für die Detektoren;

Fig. 15 ein Diagramm der Belegung der Integratoren in den Detektoren gemäß Fig. 3 und

Fig. 16 ein Diagramm der Signale eines Integrators.

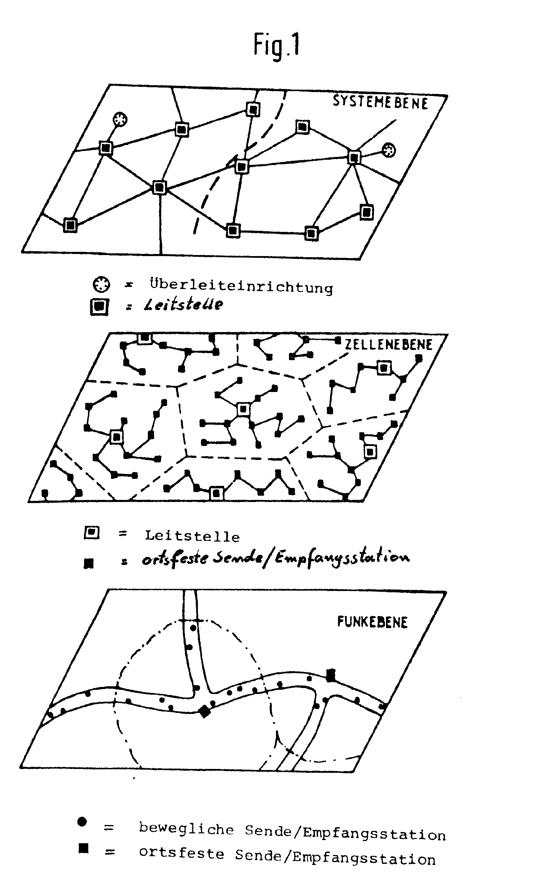

Das in Fig. 1 dargestellte Nachrichtenübertragungssystem ist in drei Ebenen aufgeteilt. Die unterste Ebene ist die Funkebene, in der mit Hilfe einer ortsfesten Sende/Empfangsstation Kommunikation mit den beweglichen Sende/Empfangsstationen in einem bestimmten Bereich betrieben wird. Die beweglichen Stationen sind durch einen dicken Punkt und die ortsfesten Stationen sind durch ein ausgefülltes Quadrat gekennzeichnet. Der ungefähre Bereich einer ortsfesten Sende/Empfangsstation ist durch eine strichpunktierte Linie angedeutet.

In der darüberliegenden Zellenebene sind jeweils mehrere ortsfeste Sende/Empfangsstationen mit einer Leitstelle verbunden. Jede Leitstelle versorgt eine Zelle. Die Leitstelle organisiert den Funkverkehr innerhalb ihrer Zelle und vermittelt die Gespräche zu einer Überleiteinrichtung weiter. Die Leitstellen sind durch ein ausgefülltes Quadrat in einem Quadrat gekennzeichnet. Die Abgrenzung der Zellen voneinander ist durch gestrichelte Linien angedeutet.

In der darüber angeordneten Systemebene sind alle Leitstellen miteinander verbunden, und jeweils mehreren Leitstellen ist eine Überleiteinrichtung zugeordnet. Die Überleiteinrichtung stellt die Verbindung zum Fernsprechwählnetz her. Die Überleiteinrichtung kann örtlich mit einer Leitstelle verbunden sein. Die Überleiteinrichtungen sind durch einen Kreis mit Punkten gekennzeichnet, und die Abgrenzung zwischen den Gebieten der Überleiteinrichtungen ist durch eine gestrichelte Linie angedeutet. Die Verbindungen der Leitstellen miteinander in der Systemebene dienen dem Datenaustausch zwischen allen Leitstellen und damit der übergeordneten Organisation des Systems, insbesondere der Erfassung der Ortsangaben der beweglichen Stationen und der Gesprächsweitergabe.

Die Verbindungen zwischen den ortsfesten Sende/Empfangsstationen und den Leitstellen und zwischen den Leitstellen untereinander geschehen durch ein Breitbandübertragungsmedium. Es kann durch eine Kabelverbindung, eine optische Lichtwellenleiterverbindung oder durch Richtfunk verwirklicht werden.

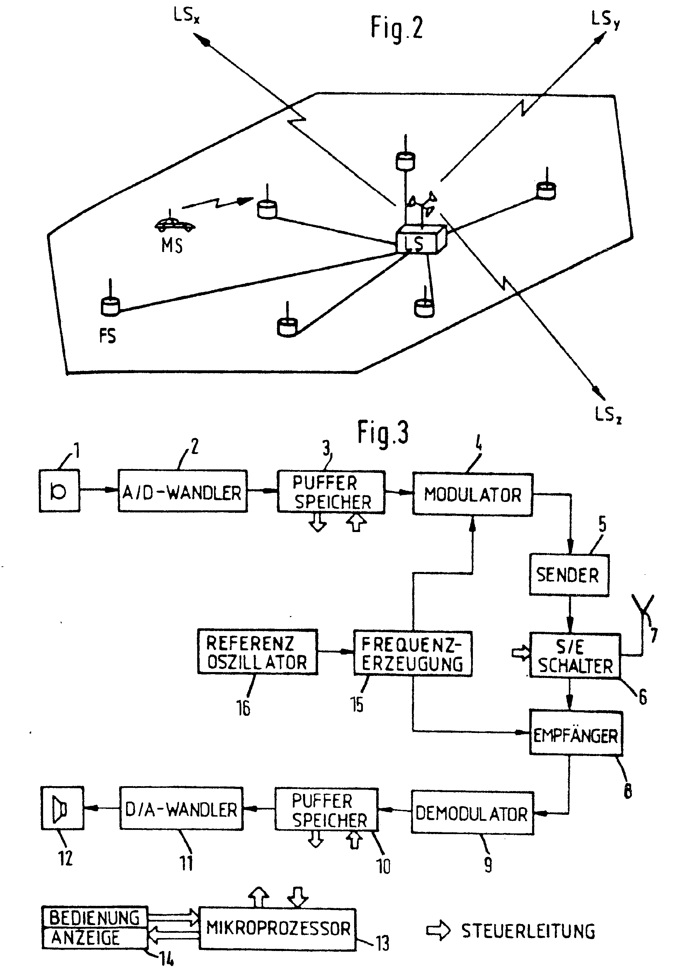

In Fig. 2 ist eine Leitstelle mit ihrer Zelle dargestellt. An die Leitstelle LS sind sechs ortsfeste Sende/Empfangsstationen FS angeschlossen, von denen eine am Ort der Leitstelle eingerichtet sein kann. Im Bereich einer ortsfesten Station FS ist eine bewegliche Sende/Empfangsstation MS dargestellt, die über die Funkstrecke, symbolisiert durch einen gebrochenen Pfeil, mit der ortsfesten Station FS verbunden ist. Die Verbindungen zwischen den ortsfesten Stationen FS und der Leitstelle LS sind beispielsweise aus optischen Lichtwellenleitern aufgebaut. Die Verbindung der Leitstelle LS zu den benachbarten Leitstellen $LS_x$, $LS_y$ und $LS_z$ ist beispielsweise durch Richtfunkstrecken verwirklicht.

Die ortsfesten Sende/Empfangsstationen sind unter dem Gesichtspunkt einer ausreichenden Bedeckung in der gesamten Zelle angeordnet, entsprechend ist auch ihre Anzahl gewählt. Die Funkübertragung zwischen den beweglichen und den ortsfesten Stationen erfolgt im Duplexverfahren im Frequenzbereich von beispielsweise 900 MHz im Zeitmultiplex mit Vielfachzugriff. Durch organisatorische Maßnahmen sorgt die Leitstelle dafür, daß keine Gleichkanalstörungen auftreten. Die ortsfesten Stationen sind in der Lage, gleichzeitig auf mehreren Kanälen im Zeitmultiplex zu kommunizieren, sie wirken aber im Gesprächsablauf nur als Relaisstation der Leitstelle. Von den ortsfesten Stationen wird festgestellt, in welchem Zuständigkeitsbereich sich die beweglichen Stationen befinden. Die Auswertung dieser Information erfolgt in der Leitstelle.

Die Leitstelle LS sorgt neben der Weiterverarbeitung der Gespräche und Daten aller ortsfesten Stationen FS für die dezentrale Organisation aller Abläufe innerhalb ihrer Zelle. Sie entscheidet über die Zuteilung von Kanälen, über den Wechsel der bedienenden ortsfesten Station und veranlaßt gegebenenfalls die Übergabe an die nächste Zelle. Dazu besitzt die Leitstelle Übertragungseinrichtungen sowie Einrichtungen zur Datenverarbeitung und Speicher für die Teilnehmernummern im Zellbereich, die zugeordneten Kanäle, die aktiven und ruffähigen beweglichen Stationen mit deren örtlicher Position und zugehöriger ortsfester Station.

Wie schon erwähnt, erfolgt die Funkübertragung im Zeitmultiplex. Bei diesem Verfahren werden Nachrichten als eine Folge von kurzen Impulsen übertragen, und das zeitliche Ineinanderschachteln von Impulsfolgen ergibt die verschiedenen Zeitschlitze oder Kanäle. In Fig. 3 ist das Blockschaltbild einer beweglichen Sende/Empfangsstation, die im Zeitmultiplex arbeitet, dargestellt. An ein Mikrofon 1 schließt sich ein Analog/Digital-Wandler (A/D) 2 an, der ein analoges Signal in binäre Zeichen umwandelt. Die binären Zeichen gelangen in einen Pufferspeicher 3, in dem sie so lange zwischengespeichert werden, bis sie im zugewiesenen Zeitschlitz in komprimierter Form die Trägerschwingung in einem nachfolgenden Modulator 4 modulieren. Daran schließt sich ein Sender 5 an, der über einen Sende/Empfangs-Schalter (S/E) 6 auf eine Antenne 7 arbeitet, die die entsprechend aufbereitete Trägerschwingung abstrahlt.

Der Modulator 4 und ein Empfänger 8 ist mit einer Frequenzerzeugung 15 verbunden, die von einem Referenzoszillator 16 gesteuert wird.

An den S/E-Schalter 6 schließt sich der Empfänger 8 an, der die empfangenen Signale in eine Zwischenfrequenz umsetzt. Im nachfolgenden Demodulator 9 werden die Signale demoduliert und in einem anschließenden Pufferspeicher 10 zwischengespeichert. Aus diesem werden sie gespreizt ausgelesen und durch einen Digital/Analog-Wandler (D/A)11 in ein analoges Signal zurückgewandelt und durch einen Hörer oder Lautsprecher 12 wiedergegeben. Weiterhin ist ein Mikroprozessor 13 und ein Bedienteil 14 mit Anzeigen vorhanden. Der Mikroprozessor 13 übernimmt organisatorische Aufgaben wie Synchronisation auf das Zeitraster, Einstellung der Zeitschlitze, Absenden von Ruf-, Kennungs- und Quittungssignalen und Verarbeitung der von der ortsfesten Station kommenden Steuerbefehle. Er ist dazu über Steuerleitungen mit den Pufferspeichern 3 und 10 und dem S/E-Schalter 6 verbunden.

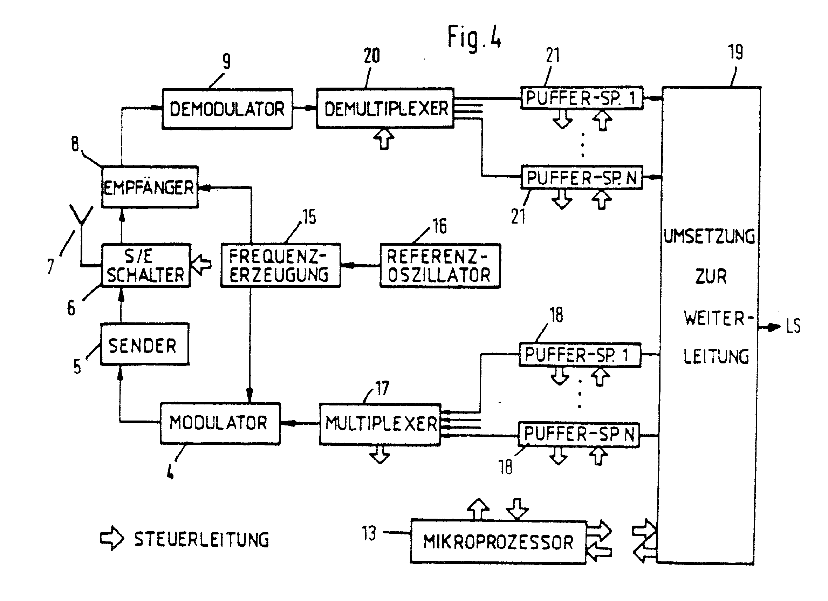

In Fig. 4 ist das Blockschaltbild einer ortsfesten Sende/Empfangsstation dargestellt. Die ortsfeste Station weist wie die beweglichen Stationen eine Antenne 7, einen Empfänger 8, einen Demodulator 9 im Empfangszweig und einen Sender 5, einen Modulator 4 im Sendezweig sowie einen Referenzoszillator 16 und eine Frequenzerzeugung 15 auf. Ebenso ist ein Mikroprozessor 13 vorhanden, der durch Steuerleitungen mit den entsprechenden Baugruppen verbunden ist.

Im Sendezweig ist vor dem Modulator 4 ein Multiplexer 17 angeordnet, der die in N Pufferspeichern 18 zwischengespeicherten mehreren Nachrichten in der richtigen zeitlichen Reihenfolge zusammenfaßt. N steht hier für die Anzahl der Zeitschlitze oder Kanäle. Die Pufferspeicher 18 sind an eine Einrichtung 19 zur Umsetzung und Weiterleitung der Nachrichten angeschlossen.

Im Empfangszweig ist an den Demodulator 9 ein Demultiplexer 20 angeschlossen, der die empfangenen zeitlich geschachtelten Nachrichten wieder auf N Pufferspeicher 21 verteilt. Die Pufferspeicher 21 sind an die Einrichtung 19 angeschlossen.

Die Art der Umsetzung der einzelnen Empfangs- und Sendesignale in der Einrichtung 19 für die Weitergabe zur Leitstelle und von der Leitstelle hängt davon ab, welches Medium benutzt wird. Zu jedem Zeitpunkt ist wegen des gewählten Vielfachzugriffs im Zeitmultiplex innerhalb einer Zelle immer nur eine bewegliche Sende/Empfangsstation mit der ortsfesten Sende/Empfangsstation verbunden. Dadurch sind gegenseitige Störungen nicht möglich.

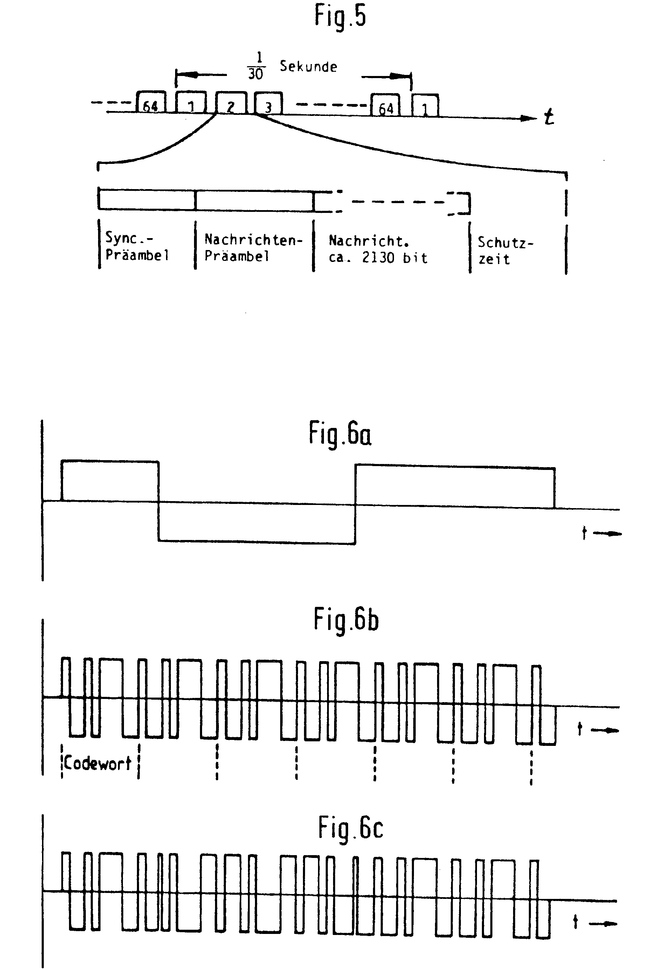

Für das Zeitmultiplexverfahren wird ein Zeitrahmen mit N = 64 Zeitschlitzen gewählt, der sich periodisch mit einer Rate von 30 pro Sekunde wiederholt. In Fig. 5 ist ein derartiger Zeitrahmen und ein einzelner Zeitschlitz, der auch als Kanal bezeichnet wird, dargestellt. Der Zeitrahmen ist $^1/_{30}$ Sekunde lang und enthält 64 Zeitschlitze, von denen nur die ersten drei Zeitschlitze, mit 1, 2, 3 gekennzeichnet, und der letzte Zeitschlitz, mit 64 gekennzeichnet, dargestellt sind.

Der Zeitschlitz Nummer 2 ist vergrößert und mit einer möglichen Belegung gezeigt. Er beginnt mit einer Synchronisationspräambel, die es den Empfängern ermöglicht, sich auf die empfangene Nachricht zu synchronisieren. Eine sich anschließende Nachrichtenpräambel enthält die zur Organisation notwendigen Daten wie Zeitschlitz- und Benutzernummer. Der nachfolgende Nachrichtenteil enthält ungefähr 2130 Bit und stellt die Sprachinformation eines Intervalls von $^1/_{30}$ Sekunde Dauer dar. Daraus ergibt sich, daß die Sprachdigitalisierung mit 64 kbit/s erfolgt. Jeder Zeitschlitz endet mit einer Schutzzeit, die zur Berücksichtigung von Laufzeiten dient. Mit diesen Größen errechnet sich eine Bitrate von ungefähr 5 Mbit/s und eine erforderliche Bandbreite von je nach verwendeter Modulationsart etwa 5 MHz. Für einen Duplex-Betrieb werden zwei derartige Frequenzbereiche benötigt.

Nachstehend wird die Steuerung des oben beschriebenen Nachrichtenübertragungssystemes beschrieben. Die Abläufe der Steuerung sind wegen der vielfältigen Aufgaben sehr komplex. Neben der reinen Gesprächsvermittlung stehen beispielsweise folgende Funktionen:

Kanalzuteilung und -überwachung,
Weitergabe zur nächsten ortsfesten
Station und Leitstelle,
Erfassung der Gebühren- und
Gesprächsdaten,
Standorterfassung der beweglichen
Stationen.

Für den Bereich einer Zelle werden von der Leitstelle die verschieden organisatorischen Maßnahmen getroffen. Die Kommunikation auf der Funkebene wird für jede bewegliche Station über nur eine ortsfeste Station abgewickelt, um Interferenzen der Signale zu vermeiden. Die Zuständigkeit einer ortsfesten Station für eine bewegliche Station wird über die Amplitude oder Laufzeit des Signals der beweglichen Station festgestellt. Entscheidungen über eine Änderung beispielsweise bei der Bewegung einer Station trifft nur die Leitstelle.

Die Übergabe zwischen ortfesten Stationen wird durch Steuerbefehle an die beiden betreffenden Stationen von der Leitstelle ausgelöst, sobald diese infolge der laufenden Fahrzeugortsbestimmung die Notwendigkeit erkennt. In der Regel ist dabei eine Änderung des zugewiesenen Kanals nicht erforderlich.

Bei der Weitergabe an andere Zellen erhält immer diejenige Leitstelle die Verbindung zum öffentlichen Fernsprechnetz aufrecht, in deren Zelle das Gespräch begann. Deshalb sind hier zwei Aufgaben zu erfüllen, wenn eine Gesprächsverbindung besteht. Erstens muß die bedienende Leitstelle in Zusammenarbeit mit der Nachbarleitstelle die Übergabe an eine ortsfeste Nachbar-Station organisieren, wobei eventuell ein neuer Kanal zuzuweisen ist, und zweitens muß die »neue« Leitstelle das Gespräch auch im weiteren Verlauf an die »alte« Leitstelle weiterleiten, damit es weiterhin von dort aus ins Fernsprechnetz gelangt.

Die Voraussetzung für den Verbindungsaufbau ist der Kontakt der beweglichen Station mit einer ortsfesten Station. Dieser Kontakt ist bei eingeschaltetem Gerät der beweglichen Station, auch wenn kein Gespräch geführt wird, dadurch immer gegeben, daß automatisch in gewissen Zeitabständen (z. B. alle 1 . . . 2 min) die Kennung auf einem speziellen Kanal gesendet wird. Diese Kennung wird laufend erfaßt und ausgewertet. Die Leitstelle führt in einem Speicher eine Liste aller gesprächsbereiten beweglichen Stationen innerhalb der Zelle und informiert den Speicher in der Heimatzelle über den augenblicklichen Standort zellenfremder beweglicher Stationen. Nach einem Zellenwechsel werden die Listen in den beiden Leitstellen korrigiert. Außerdem wird der Wechsel an die Heimatzelle der beweglichen Station gemeldet.

Bei einem Ruf von der beweglichen Station fordert diese auf einem besonderen Rufkanal über die ortsfeste Station die Zuteilung eines Gesprächskanals. Auf diesem Gesprächskanal wird die gewünschte Rufnummer des Fernsprechteilnehmers übermittelt, und die Leitstelle baut die Verbindung auf. Hebt der Fernsprechteilnehmer ab, so kommt das Gespräch zustande. Andernfalls ertönen die üblichen Zeichen (frei/besetzt). Dabei ist es für die hier betrachtete bewegliche Station unerheblich, ob der Gesprächspartner ein normales Telefon oder ein Autotelefon besitzt, da in jedem Fall über das Fernsprechnetz verbunden wird.

Zum Anruf der beweglichen Station erfolgt zunächst eine Anfrage bei der aus der Rufnummer erkenntlichen Leitstelle in der Heimatzelle. Diese hat gespeichert, ob die gerufene bewegliche Station gesprächsbereit ist, und wenn ja, wo sie sich befindet. Die augenblicklich zuständige Leitstelle wird angewählt. Sie ruft die bewegliche Station auf dem besonderen Rufkanal und weist ihr einen Gesprächskanal zu, auf dem das Gespräch dann abgewickelt wird.

Gute Sprachqualität erfordert bei Anwendung von Zeitmultiplex mit der PCM-Technik eine Begrenzung der Bitfehlerwahrscheinlichkeit auf etwa $10^{-4}$. Um dieses Ziel zu erreichen, ist bei Störung allein durch Gaußsches Rauschen ein Verhältnis aus Bitenergie $E_b$ und spektraler Rauschleistungsdichte $N_o$ von $E_b/N_o \approx 8,5$ dB erforderlich (Zweiphasenmodulation, keine Anwendung von Codierung zur Fehlerkorrektur). Aufgrund von Mehrwegeffekte bei der Wellenausbreitung ergeben sich erhebliche Störungen, die auf Signalleistungsschwund (Fading) sowie Nachbarzeichenbeeinflussung beruhen. In beiden Fällen sind Überlagerungen von Wellen die Ursache, die den Empfänger auf verschiedenen Wegen erreichen und aufgrund von Phasenunterschieden zu Abschwächungen der Signalamplitude und zu Verfälschungen der Phaseninformation führen können. Abhängig von der Statistik der Mehrwegausbreitung sind Mittelwerte für $E_b/N_o$ von etwa 40 dB notwendig, um die Bitfehlerwahrscheinlichkeit von $10^{-4}$ zu erzielen.

Häufig angewandte Gegenmaßnahmen sind Diversity-Verfahren, z. B. Mehrfachübertragung und Codierung zur Fehlerkorrektur, wobei erstere vergleichsweise geringen Aufwand benötigt, aber im allgemeinen auch geringe Wirksamkeit hat. Codierung zur Fehlerkorrektur ist in Verbindung mit Zeichenumordnung bei geeigneter Auslegung sehr wirksam. Neben dem Aufwand muß für die hier vorliegende Anwendung jedoch beachtet werden, daß sich Fehlerbündel wegen der geringen Dauer der Zeitschlitze von etwa 500 μs über große Abschnitte der Nachrichtentelegramme erstrecken können und sich nur mit langen Codes bei niedriger Coderate (= Verhältnis der Zahl von Informationszeichen zur Codelänge) korrigieren lassen. Beiden genannten Verfahren ist gemeinsam, daß sie einsetzen, nachdem über die empfangenen Zeichen eine — möglicherweise fehlerhafte — Entscheidung getroffen wurde. Das im folgenden geschilderte Verfahren versucht dagegen, fehlerhafte Entscheidungen von vornherein zu unterdrücken.

Ausgangspunkt ist die Überlegung, daß Mehrwegesignale dann nicht zu Störungen führen, wenn sie getrennt entdeckt werden können. Hierzu bieten die Spektrum-Spreizverfahren günstige Voraussetzungen. Werden Signale mit der Bandbreite B übertragen, so lassen sich ihre Ankunftszeiten mit einer Genauigkeit der Ordnung 1/B feststellen. Durch Spreizung der Bandbreite um den Faktor n schrumpft das Zeitintervall für die Entdeckung auf ein n-tel des ursprünglichen Werts. Die Spreizung der Signale wird hierbei so vorgenommen, daß die digitalisierten Signale mit einem Code multipliziert werden. Wenn die Taktfrequenz des Codes der Breite des Übertragungsbandes entspricht, wird auf diese Weise das zunächst schmalbandige Signal über das gesamte Band gespreizt. Auf der Empfangsseite wird mit dem gleichen Code das empfangene, gespreizte Signal wieder multipliziert, nachdem eine Synchronisation in einem Korrelationsvorgang stattgefunden hat. Dadurch wird das gewünschte Signal im ursprünglichen schmalen Nachrichtenband erzeugt, während unerwünschte Signale breitbandig bleiben und dadurch nicht ausgewertet werden. Ihr Störeinfluß hängt von der Kreuzkorrelation der verwendeten Codes ab.

In Fig. 6a ist ein digitalisiertes Signal dargestellt, und in Fig. 6b ist ein aus gleichen sich wiederholenden Codewörtern bestehender Code zum Spreizen des Signales dargestellt. Das gespreizte Signal ist in Fig. 6c gezeigt, aus dem zu erkennen ist, daß bei einer binären Null in 6a der Code in 6b invertiert und bei einer binären Eins nichtinvertiert wird.

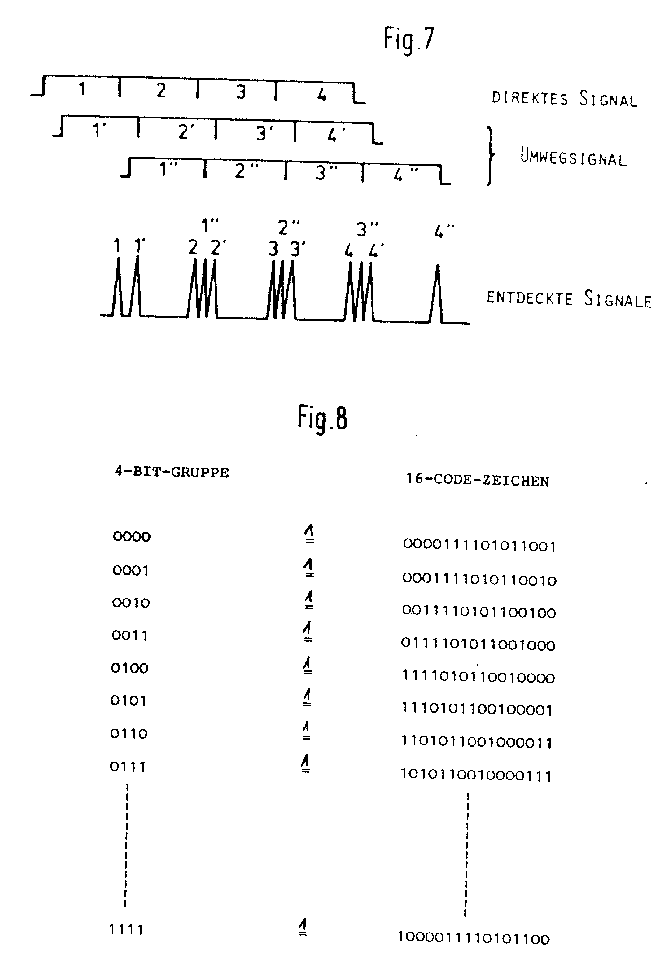

In Fig. 7 ist ein empfangenes direktes Signal und zwei Umwegsignale mit verschiedenen Laufzeiten dargestellt. Die Zeichen des direkten Signales sind mit 1, 2, 3, 4 und die der Umwegsignale mit ' bzw. " gekennzeichnet. Darunter sind die entdeckten Signale aufgezeichnet. Es ist deutlich ersichtlich, wie Signale, die sich zeitlich überlappen, aufgrund der Bandspreizung aufgelöst werden. Die Fig. 7 zeigt allerdings auch, daß es wünschenswert ist, den Entscheidungszeitraum für jedes Zeichen so weit auszudehnen, daß möglichst wenige Umwegsignale in den Entscheidungszeitraum des nachfolgenden Zeichens fallen. So stören die Zeichen 1" und 2" die Entscheidung für Zeichen 2 bzw. 3. Demgegenüber werden sich die Zeichen 1', 2' und 3' nun nicht mehr als störend bemerkbar machen. Im Gegenteil: Für die Entscheidung stehen wegen der Mehrwegeausbreitung zwei Empfangssignale zur Verfügung, beispielsweise 1 und 1'. Der Gewinn liegt in der Verringerung der Wahrscheinlichkeit, aufgrund von Fading nicht korrekt auswertbare Signale zu empfangen.

Bei einer Bitrate von 5 Mbit/s, wie sie weiter oben angegeben wurde, beträgt der Entscheidungszeitraum für jedes Bit 200 ns. Damit würden Umwegsignale mit einer Wegdifferenz von mehr als 60 m zum direkten Signal bereits in den Entscheidungszeitraum nachfolgender Zeichen fallen.

Um die Auswertung des Signalgemisches aus direktem Signal und Umwegsignal zu verbessern, werden jeweils n Bits zu einer n-Bit-Gruppe zusammengefaßt und durch ein m-wertiges Code-Zeichen ersetzt. In Fig. 8 sind für n gleich 4 in der linken Spalte die möglichen Varianten der 4-Bit-Gruppe zum Teil dargestellt und in der rechten Spalte für m gleich 16 die durch zyklische Vertauschung gewonnenen Code-Zeichen zum Teil dargestellt.

Diese Maßnahme erhöht die Bandbreite um den Faktor 4 (= 16 : 4) auf etwa 20 MHz, bringt aber zwei entscheidende Vorteile. Erstens verkürzt sich das Zeitintervall für die Entdeckung um denselben Faktor, so daß Signale mit Wegedifferenzen von mehr als 15 m getrennt erkannt und ausgewertet werden können. Zweitens verlängert sich der Entscheidungszeitraum für ein Nachrichtenzeichen von 200 ns auf 800 ns, wodurch erst Umwegsignale mit einer Wegdifferenz von mehr als 240 m nachfolgende Zeichen stören können. Sollte auch bei größeren Umwegen mit erheblichen Störungen zu rechnen sein, so können diese weitgehend unterdrückt werden, wenn sich der Code der 16-wertigen Codezeichen für die aufeinanderfolgenden 4-Bit-Gruppen z. B. nach einer Pseudo-Zufallsfolge von Zeichen zu Zeichen ändert.

Jede einzelne Zelle soll die Kapazität von 64 Zeitkanälen mit beliebiger Verteilung auf die Funkbereiche voll ausnutzen können. Das bedeutet aber, daß im Übergangsgebiet zwischen den Zellen Funksignale verschiedener Zellen empfangen werden können und eine zeitliche Trennung nicht immer gegeben ist. Zur Vermeidung von Störungen werden den Zellen unterschiedliche Codes für die 16-wertigen Code-Zeichen zugeordnet. Da die Anzahl der verwendbaren Codes mit guten Korrelationseigenschaften begrenzt ist, wiederholen sich die Codes in einer gewissen, von den Ausbreitungsbedingungen abhängigen Entfernung.

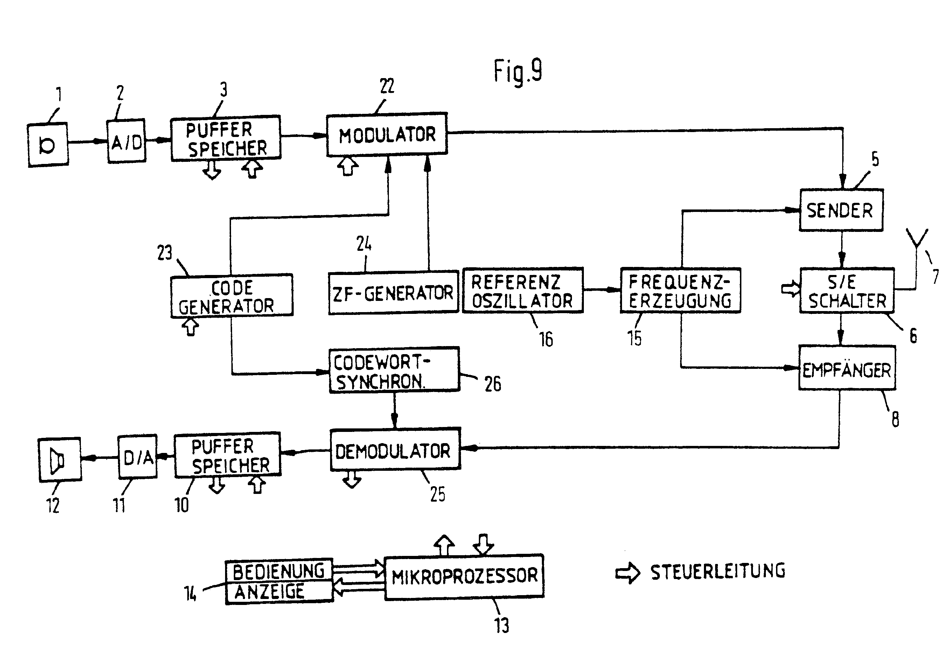

In Fig. 9 ist das Blockschaltbild einer beweglichen Sende/Empfangsstation, die im Zeitmultiplex unter Anwendung der Spreizspektrumstechnik in jedem Zeitschlitz arbeitet, dargestellt. Hierzu ist die bewegliche Station gemäß Fig. 3 erweitert worden, und alle gleichen Schaltkreise sind mit dem gleichen Bezugszeichen versehen und werden daher nicht mehr im einzelnen beschrieben. An den Pufferspeicher 3 schließt sich ein Modulator 22 an, der auch von einem Code-Generator 23 und einem ZF-Generator 24 gesteuert wird. Das digitale Signal vom Pufferspeicher 3 tastet z. B. bei einer Zweiphasenmodulation die Phase des Signales des ZF-Generators 24 um, das anschließend mit dem zum jeweiligen Zeitschlitz gehörenden Code des Code-Generators 23 multipliziert und dadurch gespreizt wird. Das Ausgangssignal des Modulators 22 gelangt auf den Sender 5, der mit der Frequenzerzeugung zur Umsetzung in ein hochfrequentes Signal verbunden ist, und von dort über den S/E-Schalter 6 auf die Antenne 7 zur Abstrahlung.

Nach dem Empfänger 8 ist ein Demodulator 25 angeordnet, der auch von einem Codewort-Synchronisator 26 gesteuert wird. Das empfangene und im Empfänger 8 umgesetzte Signal wird zuerst mit dem Codewort in einem Korrelationsvorgang synchronisiert und dann multipliziert, um die Spreizung wieder aufzuheben. Das erhaltene im ursprünglichen schmalen Nachrichtenband liegende Signal wird an den Pufferspeicher gegeben und wie schon beschrieben letztlich im Lautsprecher wiedergegeben.

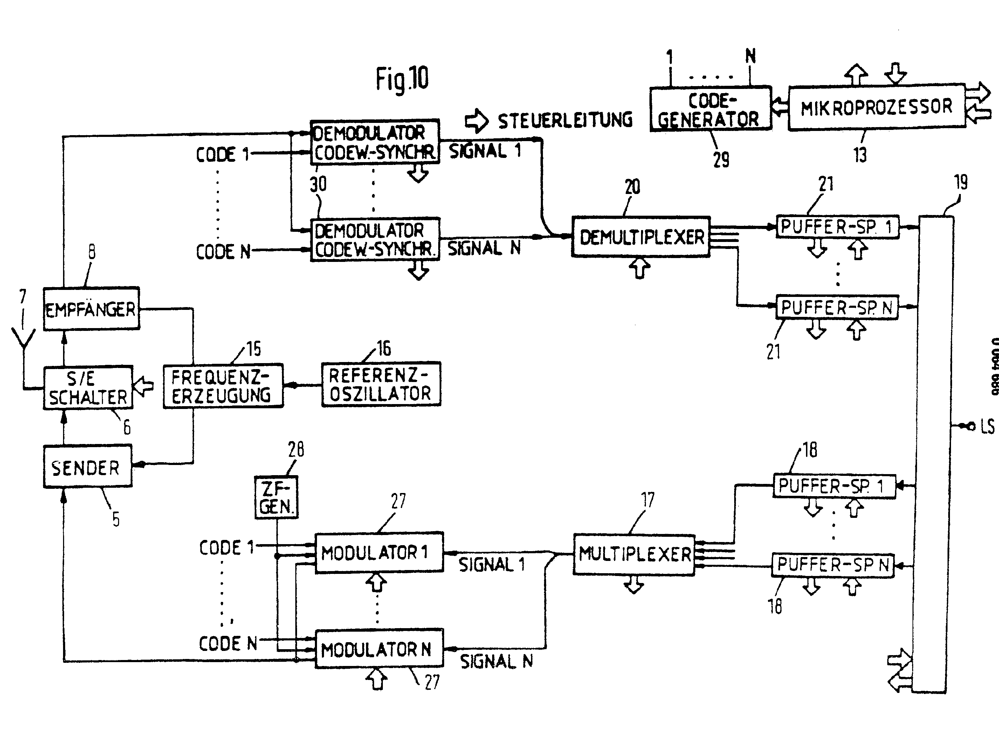

In Fig. 10 ist das Blockschaltbild einer ortsfesten Sende/Empfangsstation dargestellt, die im Zeitmultiplex unter Anwendung der Spreizspektrumstechnik arbeitet. Hierzu ist die ortsfeste Station gemäß Fig. 4 erweitert worden, und alle gleichen Schaltkreise sind mit den gleichen Bezugszeichen versehen und werden daher nicht mehr im einzelnen erläutert. An den Multiplexer 17 schließen sich N Modulatoren 27 an, die auch von einem ZF-Generator 28 und von einem der N Codes gesteuert werden. Die N Codes werden in einem Code-Generator 29 erzeugt. Die Signale 1 bis N des Multiplexers 17 tasten in den Modulatoren 27 z. B. bei einer Zweiphasenmodulation die Phase des ZF Generators 28 um und werden anschließend mit dem jeweiligen Code des Code Generators 29 multipliziert und dadurch gespreizt. Die Signale der Modulatoren gelangen wie beschrieben zur Antenne 7 und werden abgestrahlt.

Nach dem Empfänger 8 sind N Demodulatoren 30 mit Codewort-Sychronisatoren angeordnet, an die auch die N Codes des Codegenerators 29 angelegt sind. Das vom Empfänger 8 abgegebene Signal wird in den Demodulatoren 30 zuerst mit dem jeweiligen Codewort in einem Korrelationsvorgang synchronisiert und dann multipliziert, um die Spreizung wieder aufzuheben. Die nun wieder schmalen Signale 1 bis N gelangen in den Demultiplexer 20 und werden wie schon beschrieben weiterverarbeitet.

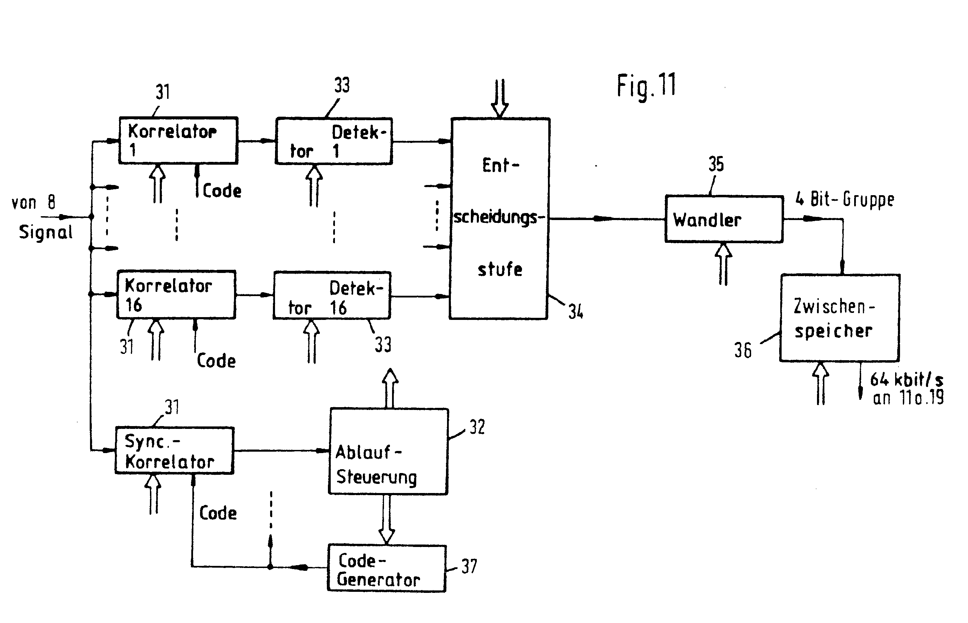

Die Funkstrecke zwischen den beweglichen Stationen und der ortsfesten Station ist der störempfindliche Teil des gesamten Übertragungsweges. Neben der schon beschriebenen Mehrwegeausbreitung beeinträchtigen das Nutzsignal hier noch Rauschen, spektrale Anteile aus benachbarten Frequenzbändern und gleichzeitige Signale aus anderen Zellen. Deshalb ist eine leistungsfähige Signalverarbeitung im Empfänger eine der wesentlichen Grundlagen für das Funktionieren des Systems. In Fig. 11 ist daher die im Empfänger vorgesehene Einheit zur Rückgewinnung des ausgesendeten Signales dargestellt.

Vom Empfänger 8 gelangt das Signal an 17 Korrelatoren 31, wenn m gleich 16 für das Code-Zeichen gemäß Fig. 8 ist, die auch von einem Code-Generator 37 gesteuert werden. Von den 17 Korrelatoren 31 dient einer der Sychronisation der Zeitschlitze und wird für die Ablaufsteuerung 32 der Zeitschlitze benötigt. Die anderen 16 Korrelatoren 31 vergleichen das empfangene Signal mit den 16 Codeworten des 16-wertigen Alphabets. Dabei können benachbarte Zellen zur Unterscheidung jeweils einen anderen Satz von Codeworten benutzen. Wenn es wegen starker Signale mit langen Umwegen von mehr als 240 m erforderlich ist, kann der Code dieses Alphabets von einer zur anderen 4-Bit-Gruppe pseudostatistisch wechseln.

Auf die Korrelatoren 31 folgen 16 Detektoren 33, welche Maxima in der Autokorrelationsfunktion erkennen. Eine nachfolgende Entscheidungsstufe 34 wählt aus allen erkannten Maxima das größte heraus und definiert das dem entsprechenden Korrelator zugeordnete Codewort als das mit höchster Wahrscheinlichkeit gesendete Zeichen. Ein nachgeschalteter Wandler 35 erzeugt die zugehörige 4-Bit-Gruppe und führt sie dem Zwischenspeicher zu. Dieser liefert die während eines Zeitschlitzes eingegangenen Signale an seinem Ausgang mit einem kontinuierlichen Strom von 64 kbit/s ab.

Die weitere Verarbeitung hängt davon ab, in welchem Gerät sich diese Signalverarbeitungseinheit befindet. In der beweglichen Station erfolgt eine Umwandlung des digitalen über ein analoges in ein akustisches Signal, während die ortsfeste Station die digitalen Zeichen umsetzt und, bei Weiterbildung über einen Lichtwellenleiter, elektrisch/optisch wandelt.

Bei dieser Art der Auswertung geschieht die Abtastung der Korrelatoren zur Wiedergewinnung des gesendeten Zeichens zum Zeitpunkt der größten Korrelationsspitze im Synchronisationskorrelator. Durch Umwegsignale beim Mehrwegeempfang ergeben sich weitere Korrelationsspitzen, die nicht benutzt werden.

Wenn die Umwegsignale beim Mehrwegeempfang genutzt werden, dann ergibt sich eine erhöhte Übertragungsqualität. Wegen des damit verbundenen erhöhten Aufwandes ist es auch denkbar, diesen Aufwand nur bei Feststationen und dort nur bei solchen in besonders kritischen Gebieten zu treiben. Gleichzeitig sollte dann die Sendeleistung dieser Stationen über der der beweglichen Stationen liegen, um eine für beide Übertragungsrichtungen ausgewogene Qualität zu erreichen.

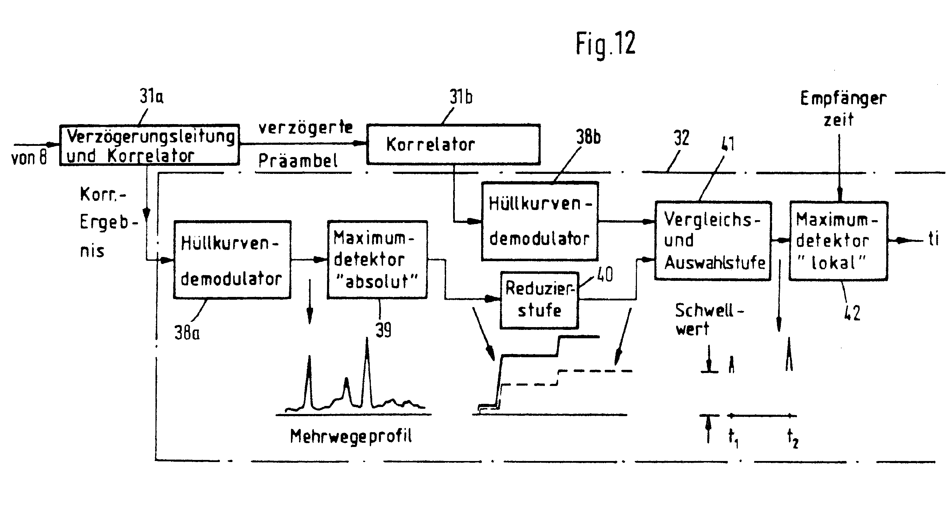

In Fig. 12 ist ein Blockschaltbild einer Schaltung zur Erfassung aller Korrelationsspitzen der Synchronisationspräambel dargestellt. Die Synchronisationspräambel gelangt vom Empfänger 8 an zwei in Reihe geschaltete Korrelatoren 31a und 31b zur Synchronisation. Der erste Korrelator 31a dient dabei gleichzeitig als Verzögerungsleitung für den zweiten Korrelator 31b und beide sind an die teilweise dargestellte Ablaufsteuerung 32 angeschaltet.

Das Korrelationsergebnis des ersten Korrelators 31a gelangt an einen Hüllkurvendemodulator 38a, dem ein Maximumdetektor 39 und eine Reduzierstufe 40 nachgeschaltet ist. Das Korrelationsergebnis des zweiten Korrelators 31b gelangt an einen Hüllkurvendemodulator 38b. Die Ausgänge der Hüllkurvendemodulatoren sind an eine Vergleichs- und Auswahlstufe 41 angeschlossen, der ein weiterer Maximumdetektor 42 nachgeschaltet ist. Am Ausgang des Maximumdetektors 42 können die Ankunftzeiten ti von relevanten Umwegsignalen, auch Pfade genannt, abgenommen werden und stehen für den Empfang der Zeichen zur Verfügung.

Das auf diese Weise gewonnene Mehrwegeprofil bildet sich im zeitlichen Verlauf der Ausgangsspannung des Korrelators für die Synchronisation ab. Die Verzögerungszeit des Korrelators 31a muß so groß gewählt werden, daß das Korrelationsergebnis des stärksten Pfades vorliegt, wenn die Ausgangssignale des Korrelators 31b zum Vergleich in der Vergleichs- und Auswahlstufe 41 anstehen. Aus dem Korrelationsergebnis des stärksten Pfades wird ein Schwellwert für die Vergleichs- und Auswahlstufe 41 abgeleitet. Der Schwellwert dient dazu, im Rauschen oder wenig darüber liegende Korrelationsspitzen zu unterdrücken.

Der Maximumdetektor 39 ermittelt das absolute Maximum der Korrelationsspitzen, während der Maximumdetektor 42, dem auch die Empfangszeit zugeführt wird, die Ankunftszeiten der den Schwellwert überschreitenden Spitzen ermittelt. Die Reduzierstufe 40 bildet aus dem Pegel des stärksten Pfades den Schwellwert, mit dem das Mehrwegeprofil in der Vergleichs- und Auswahlstufe verglichen wird.

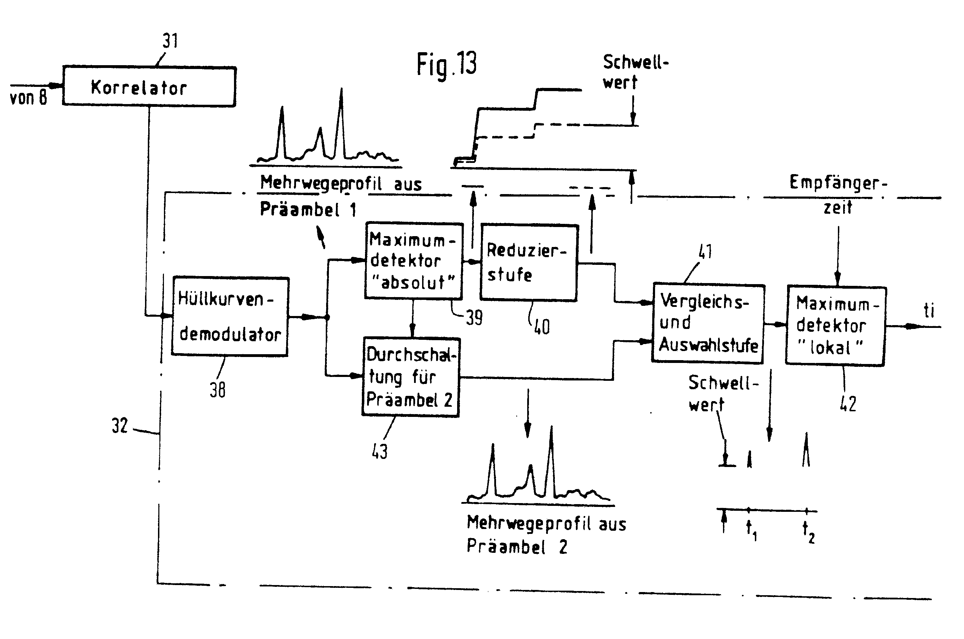

Wenn die Synchronisationspräambel zweimal mit einer dazwischen liegenden und einer nachfolgenden Pause ausgesendet wird, dann kann eine einfachere Schaltung zur Erfassung aller Korrelationsspitzen eingesetzt werden, die in Fig. 13 dargestellt ist.

Der Korrelator 31 ist an den Empfänger 8 angeschlossen, und sein Ausgang ist mit der teilweise dargestellten Ablaufsteuerung 32 verbunden. Darin ist ein Hüllkurvendemodulator 38 vorhanden, dem ein Maximumdetektor 39 für den absoluten Wert, eine Reduzierstufe 40, eine Vergleichs- und Auswahlstufe 41 und ein Maximumdetekor 42 für den lokalen Wert nachgeschaltet ist. Am Ausgang des Maximumdetektors 42 können wieder die Ankunftzeiten ti der relevanten Pfade abgenommen werden. An den Hüllkurvendemodulator 38 ist ein vom Maximumdetektor 39 gesteuerter Schaltkreis 43 zur Durchschaltung der zweiten Synchronisationspräambel auf die Vergleichs- und Auswahlstufe 41 angeschlossen.

Mit Hilfe der ersten Sychronisationspräambel werden das absolute Maximum des Mehrwegeprofils sowie der Schwellwert bestimmt. Aus der Korrelation der zweiten Sychronisationspräambel werden dann die Ankunftszeiten der relevanten Pfade bestimmt. Da der Korrelator und der Hüllkurvendemodulator zweimal nacheinander benutzt werden, ist der Aufwand im Vergleich zur Schaltung gemäß Fig. 12 kleiner. Die benötigten Auswertzeiten sind in beiden Schaltungen gleich groß.

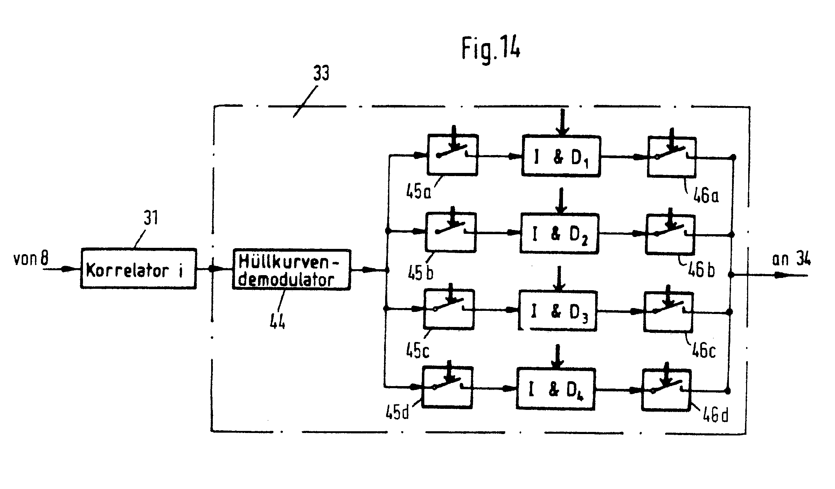

In Fig. 14 ist das Blockschaltbild eines Detektors 33 für eine mehrfache Abtastung der empfangenen Zeichen dargestellt. Von den vorhandenen 16 Korrelatoren 31 und Detektoren 33 ist nur jeweils einer dargestellt, um eine einfache Darstellung zu haben. 16 Korrelatoren und Detektoren sind vorhanden, weil im gewählten Beispiel ein m = 16 wertiges Alphabet genommen wurde.

Der Korrelator 31 gibt sein Signal an einen Hüllkurvendemodulator 44, an den vier Reihenschaltungen eines Schalters 45a—d mit einem Integrator mit Nullsetzung $ID_{1-4}$ und einem weiteren Schalter 46a—d parallel angeschlossen sind.

Der Ausgang dieser Parallelschaltungen ist an die Entscheidungsstufe 34 angeschlossen. Mit dieser Schaltung wird eine inkohärente Integration der Korrelationsergebnisse der Zeichenkorrelatoren durchgeführt. Die Parallelschaltung von vier Integratoren mit Nullsetzung erlaubt es, die Integration über einen Zeitraum von vier m-wertigen Codezeichen durchzuführen.

Es sei bspw. m = 16, und die Dauer eines Codebits betrage 100 ns. Die Zeichendauer ist 1,6 μs, und die Integrationszeit ist 6,4 μs.

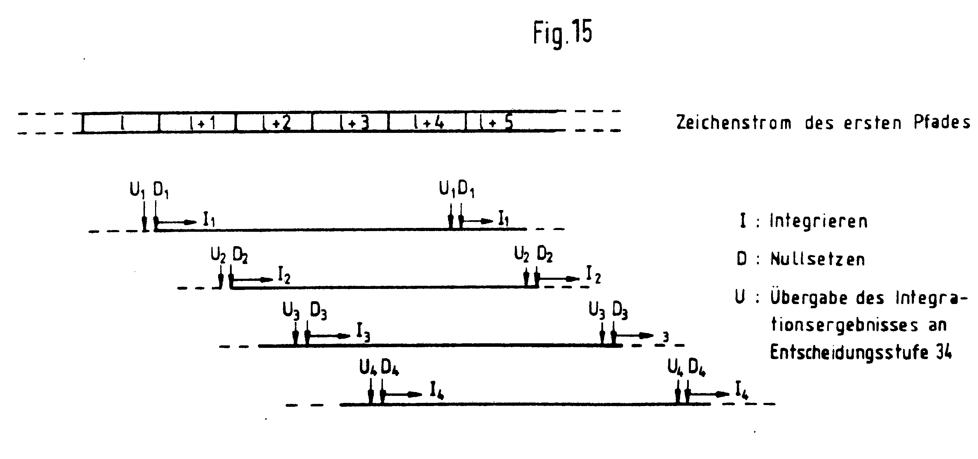

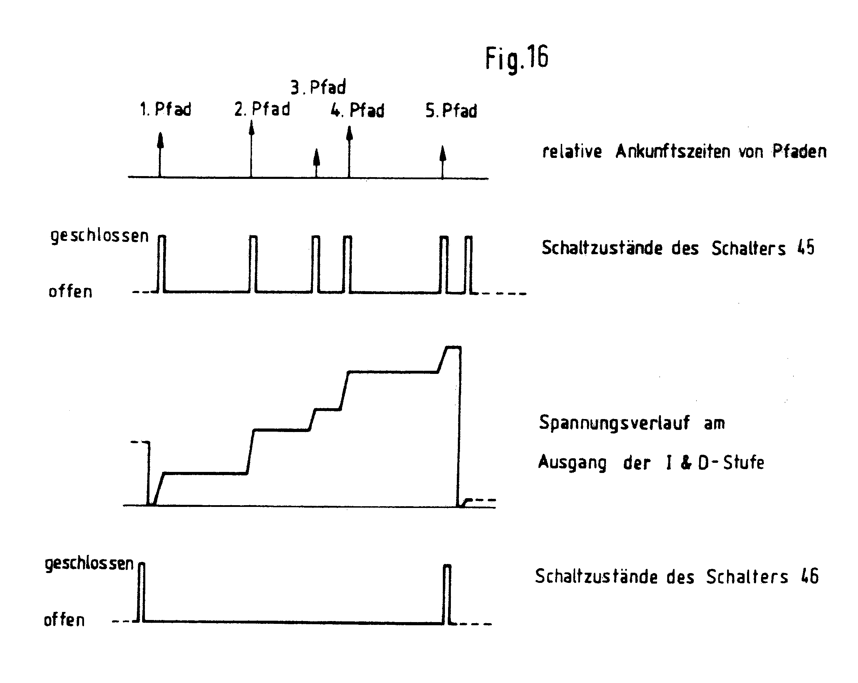

Die Schalter 45 und 46 werden von der Ablaufsteuerung gesteuert und dienen zur zeitlich richtigen Übergabe der Korrelationsergebnisse an die Integratoren und zur Übergabe der Integrationsergebnisse an die Entscheidungsstufe 34. In den Fig. 15 und 16 ist die zeitliche Abfolge der Vorgänge an den Integratoren mit Nullsetzung in Diagrammen dargestellt. Der Zyklus jeder der dargestellten vier Reihenschaltungen erstreckt sich über einen Zeitraum von vier m-wertigen Codezeichen. Die Zyklen sind untereinander um jeweils eine Zeichendauer versetzt. Am Beginn jedes Zyklusses ist jeder Integrator auf Null gesetzt. Zu den Korrelationszeiten jedes der in Fig. 15 angenommenen fünf Pfade des Mehrwegefeldes ist der Schalter 45 für eine kurze Zeit geschlossen. Hierdurch werden die Korrelationsergebnisse aufsummiert. Am Ende des Zyklusses erfolgt durch Schließen des Schalters 46 die Übergabe des Integrationsergebnisses an die Entscheidungsstufe 34. Die Entscheidungsstufe 34 wählt aus dem M gleichzeitig eingehenden Werten den größten aus und schätzt so das gesendete Zeichen.

Eine Anmerkung ist zur Laufzeitdifferenz zwischen dem ersten und dem letzten zu integrierenden Pfad nötig. Jeder Pfad liefert aufeinanderfolgende Zeichen mit der Dauer $m \cdot \tau$. Hierbei bedeutet m die Codebitanzahl des Codezeichens und $\tau$ die Dauer eines Codebits. Bei einer Sprachrate von 32 Kb/s und dem schon angeführten Wert von m = 16 ergibt sich

$$\tau = \frac{1}{10 \, \text{MHz}} = 100 \, \text{ns}.$$

Daraus folgt für $m \cdot \tau = 1,6$ μs. Mehrwegeprofile im Mobilfunk erstrecken sich jedoch bis zu 6 μs, in Extremfällen bis etwa 10 μs. Da ein Integrator pro Korrelator etwa 6 μs belegt sein kann, müssen für die in der Zwischenzeit eintreffenden Zeichen weitere Integratoren zur Verfügung stehen. Im genannten Beispiel genügen vier Integratoren pro Korrelator: der erste startet bei to, der zweite bei to + 1,6 μs, der dritte bei to + 3,2 μs und der vierte bei to + 4,8 μs. Zur Zeit von to + 6,4 μs ist der erste Integrator dann wieder verfügbar.

Mit Hilfe der Integratoren läßt sich auch eine Amplitudengewichtung vornehmen. Hierzu werden den Integratoren bspw. mehrere diskret gestufte Integrationskonstanten zur Verfügung gestellt. Die einfachste Art der Amplitudengewichtung besteht darin, nur die Ergebnisse solcher Pfade zu integrieren, die etwa leistungsgleich sind, und dabei die Integrationszeitkonstante nicht zu verändern.

Ob eine oder mehrere Abtastungen der Korrelatoren für die Zeichen erfolgt, läßt sich durch die Höhe des Schwellwertes in der Ablaufsteuerung einstellen.

Bei einer sehr hohen Schwelle erfolgt nur eine Abtastung bei der maximalen Korrelationsspitze. Bei einer abgesenkten Schwelle erfolgt je nach den auftretenden Korrelationsspitzen eine mehrfache Abtastung.

## Patentansprüche

1. Nachrichtenübertragungssystem mit ortsfesten Sende/Empfangsstationen (FS) und mit beweglichen Sende/Empfangsstationen (MS), die über Funk mit den ortsfesten Stationen Nachrichten austauschen können, wobei mehrere ortsfeste Stationen von einer Leitstelle (LS) gesteuert werden, von denen wiederum mehrere mit einer Überleiteinrichtung zu einem Fernsprechwählnetz verbunden sind, dadurch gekennzeichnet, daß die Leitstellen (LS) miteinander verbunden sind und daß mindestens der Funkverkehr im Zeitmultiplex mit Vielfachzugriff erfolgt.

2. Nachrichtenübertragungssystem nach Anspruch 1, dadurch gekennzeichnet, daß die Überleiteinrichtung mit einer der Leitstellen (LS) örtlich vereint ist.

3. Nachrichtenübertragungssystem nach Anspruch 1, dadurch gekennzeichnet, daß in jeder Leitstelle (LS) Mittel vorhanden sind, die die Zuteilung von Kanälen im Zeitmultiplex an die ortsfesten Stationen (FS), den Wechsel der bedienenden ortsfesten Station (FS) und die Übergabe einer Verbindung einer beweglichen Sende/Empfangsstation (MS) an eine benachbarte Leitstelle (LS) steuern.

4. Nachrichtenübertragungssystem nach Anspruch 1, dadurch gekennzeichnet, daß die beweglichen Sende/Empfangsstationen (MS) bei eingeschaltetem Gerät sich auf das empfangene Zeitraster synchronisieren und in Zeitabständen ihre Kennung auf einem dafür vorgesehenen Kanal und daß in der zugehörigen Leitstelle (LS) aus der Laufzeit der Kennungen die Entfernung der beweglichen Stationen (MS) von der zugehörigen ortsfesten Station bestimmbar ist.

5. Nachrichtenübertragungssystem nach Anspruch 4, dadurch gekennzeichnet, daß die jeweils aktuellen Aufenthaltsbereiche der aktiven beweglichen Sende/Empfangsstationen (MS) in ihrer Heimatleitstelle in einem Speicher eingeschrieben sind.

6. Nachrichtenübertragungssystem nach Anspruch 1, dadurch gekennzeichnet, daß 64 Zeitschlitze für den Vielfachzugriff im Zeitmultiplex vorgesehen sind.

7. Nachrichtenübertragungssystem nach Anspruch 1, dadurch gekennzeichnet, daß die ortsfesten Sende/Empfangsstationen (MS) mit ihren zugehörigen Leitstellen (LS) durch ein Breitbandübertragungsmedium, insbesondere eine optische Lichtwellenleiterverbindung, verbunden sind.

8. Nachrichtenübertragungssystem nach einem der vorhergehenden Ansprüche, dadurch gekennzeichnet, daß in jedem Zeitschlitz N der Zeitmultiplexübertragung der zu übertragenden Information mindestens eine Synchronisationspräambel vorangestellt ist, durch die sich die bewegliche Sende/Empfangsstationen auf das empfangene Zeitraster synchronisieren, und daß die Übertragung in Spreizspektrumstechnik erfolgt.

9. Nachrichtenübertragungssystem nach Anspruch 8, dadurch gekennzeichnet, daß jeweils n zu übertragene Bits zu einer n-Bit-Gruppe zusammengefaßt sind und durch ein m-wertiges Codezeichen codiert sind.

10. Nachrichtenübertragungssystem nach Anspruch 9, dadurch gekennzeichnet, daß in benachbarten Leitstellen (LS) verschiedene Codes der m-wertigen Codezeichen benutzt werden.

11. Nachrichtenübertragungssystem nach Anspruch 9, dadurch gekennzeichnet, daß sich der Code der m-wertigen Codezeichen für aufeinanderfolgende n-Bit-Gruppen nach einer Pseudo-Zufallsfolge von Gruppe zu Gruppe ändert.

12. Nachrichtenübertragungssystem nach Anspruch 9, dadurch gekennzeichnet, daß in jedem Zeitschlitz (N) alle auftretenden Korrelationsspitzen der Synchronisations-Präambel(n) in einem oder zwei Synchronisations-Korrelatoren (31) ermittelt werden und daß m Zeichenkorrelatoren vorgesehen sind, die für jedes Zeichen mindestens zu den Zeitpunkten abgetastet werden, die den Zeitpunkten der größten Korrelationsspitze der Präambel entsprechen.

13. Nachrichtenübertragungssystem nach Anspruch 12, dadurch gekennzeichnet, daß zur Ermittlung der Korrelationsspitzen und Auswahl der größten Korrelationsspitze die Synchronisations-Präambel zweimal ausgesendet wird.

14. Nachrichtenübertragungssystem nach Anspruch 12, dadurch gekennzeichnet, daß zur Ermittlung der Korrelationsspitzen und Auswahl der größten Korrelationsspitze die Synchronisations-Präambel einmal unverzögert und einmal verzögert ausgewertet wird, wobei die Ermittlung in zwei hintereinander geschalteten Korrelatoren (31a, 31b) erfolgt.

15. Nachrichtenübertragungssystem nach Anspruch 12, dadurch gekennzeichnet, daß bei mehrmaliger Abtastung die Abtastwerte in den Zeichenkorrelatoren (31) nachgeschalteten Detektoren (33) aufsummiert werden.

16. Nachrichtenübertragungssystem nach Anspruch 15, dadurch gekennzeichnet, daß die mehrfache Abtastung beim Auftreten von mehreren annähernd gleichen Korrelationsspitzen erfolgt.

17. Nachrichtenübertragungssystem nach Anspruch 15, dadurch gekennzeichnet, daß die Abtastwerte am Ausgang der Korrelatoren (31) für die Zeichen gewichtet aufsummiert werden.

18. Nachrichtenübertragungssystem nach Anspruch 17, dadurch gekennzeichnet, daß die Aufsummierung durch Integratoren (ID) erfolgt, die zu Beginn jedes Zykluses auf Null setzbar sind.

19. Nachrichtenübertragungssystem nach Anspruch 18, dadurch gekennzeichnet, daß zur Gewichtung der Abtastwerte die Integratoren (ID) auf verschiedenen Integrationszeitkonstanten einstellbar sind.

20. Nachrichtenübertragungssystem nach Anspruch 18, dadurch gekennzeichnet, daß mehrere Integratoren ($ID_{1\ 4}$) parallel geschaltet sind, die nacheinander zu bestimmten Zeiten einschaltbar sind.

## Claims

1. Communication system comprising fixed transmitting/receiving stations, mobile transmitting/receiving stations capable of communicating with the fixed stations by radio, control stations each controlling a plurality of the fixed stations, and an interface facility having a plurality of the control stations connected thereto and providing the connection to a dial-telephone network, characterized in that the control stations (LS) are interconnected, and that time-division multiple access is used at least for radio communication.

2. A communication system as claimed in claim 1, characterized in that the interface facility is colocated with one of the control stations (LS).

3. A communication system as claimed in claim 1, characterized in that each control station (LS) includes means which control the allocation of channels to the fixed stations (FS) using time-division multiplexing, the change of the communicating fixed station (FS), and the handoff of a mobile transmitting/receiving station (MS) to a neighbouring control station (LS).

4. A communication system as claimed in claim 1, characterized in that , when the set is on, the mobile transmitting/receiving stations (MS) synchronize themselves to the received time slot pattern and transmit their identifacations at certain time intervals on a channel provided therefor, and that in the associated control station (LS), the distances of the mobile stations (MS) form the associated fixed station can be determined from the propagation times of the indentifications.

5. A communication system as claimed in claim 4, characterized in that the respective areas in which the active mobile transmitting/receiving stations (MS) are currently located are stored in a memory in the home control station for these stations.

6. A communication system as claimed in claim 1, characterized in that 64 time slots are provided for the time-division multiple access.

7. A communication system as claimed in claim 1, characterized in that the fixed transmitting/receiving stations (FS) are connected with their associated control stations (LS) by a broadband transmission medium, particularly a fiber-optic link.

8. A communication system as claimed in any one of the preceding claims, characterized in that in each time slot N of the time-division-multiplex transmission, the information to be transmitted is preceded by at least one synchronization preamble which causes the mobile transmitting/receiving stations to synchronize with the received time slots, and that spread-spectrum techniques are used for the transmission.

9. A communication system as claimed in claim 8, characterized in that every n bits to be transmitted are combined to form an n-bit group and are encoded by an m-element code character.

10. A communication system as claimed in claim 9, characterized in that in neighbouring control stations (LS), different codes of the m-element code characters are used.

11. A communication system as claimed in claim 9, characterized in that for successive n-bit groups the code of the m-element code characters changes from group to group according to a pseudo-random sequence.

12. A communication system as claimed in claim 9, characterized in that in each time slot (N) all the occurring correlation peaks of the synchronization preamble(s) are determined in one or two synchronization correlators (31) and that there are provided m character correlators which, for each character, are scanned at least at the times which correspond to the times of the largest correlation peak of the preamble.

13. A communication system as claimed in claim 12, characterized in that, for determining the correlation peaks and choosing the largest correlation peak, the synchronization preamble is transmitted twice.

14. A communication system as claimed in claim 12, characterized in that, for determining the correlation peaks and choosing the largest correlation peak, the synchronization preamble is evaluated once without delay and once with delay, the determination taking place in two correlators (31a, 31b) connected after each other.

15. A communication system as claimed in claim 12, characterized in that, when the scanning values are scanned a plurality of times, the scanning values are added up in detectors (33) connected after the character correlators (31).

16. A communication system as claimed in claim 15, characterized in that the multiple scanning takes place upon the occurrence of several approximately equal correlation peaks.

17. A communication system as claimed in claim 15, characterized in that the sample values appearing at the outputs of the character correlators (31) can be summed in weighted form.

18. A communication system as claimed in claim 17, characterized in that the adding up is carried out by integrators (ID) which can be set to zero at the beginning of each cycle.

19. A communication system as claimed in claim 18, characterized in that the integrators (ID) can be set to different integration time constants for the purpose of weighting the scanning values.

20. A communication system as claimed in claim 18, characterized in that several integrators ($ID_{1-4}$) which can be switched on in succession at certain times are connected in parallel.

## Revendications

1. Système de télécommunication comportant des postes émetteurs/récepteurs fixes (FS) ainsi que des postes émetteurs/récepteurs mobiles (MS) qui peuvent échanger des communications par radio avec les postes fixes, plusieurs postes fixes étant commandés par une station de contrôle (LS) et plusieurs de ces dernières étant à leur tour raccordées à un réseau téléphonique automatique par un dispositif de transfert, caractérisé en ce que les stations de contrôle (LS) sont raccordées les unes aux autres et en ce que les communications radio au moins s'effectuent par multiplexage dans le temps avec accès multiple.

2. Système de télécommunication conforme à la revendication 1, caractérisé en ce que le dispositif de transfert est installé au même endroit qu'une des stations de contrôle (LS).

3. Système de télécommunication conforme à la revendication 1, caractérisé en ce qu'il exists dans chaque station de contrôle (LS) des moyens qui commandent l'attribution de canaux à multiplexage dans le temps dans les postes fixes (FS), le changement du poste fixe (FS) employé, et le transfert d'une communication intéressant un poste émetteurs/récepteur mobile (MS) à une station de contrôle (LS) voisine.

4. Système de télécommunication conforme à la revendication 1, caractérisé en ce que, en service, les postes émetteurs/récepteurs mobiles (MS) se synchronisent sur la trame temporelle reçue et envoient par intervalles leur indicatif sur un canal prévu à cet effet, et en ce que la station de contrôle (LS) correspondante peut déterminer d'après le temps de propagation des indicatifs la distance des postes mobiles (MS) par rapport au poste fixe correspondant.

5. Système de télécommunication conforme à la revendication 4, caractérisé en ce que les différents secteurs dans lesquels se trouvent momentanément les postes émetteurs/récepteurs mobiles (MS) sont enregistrés dans une mémoire à leur station de contrôle d'attache.

6. Système de télécommunication conforme à la revendication 1, caractérisé en ce que 64 canaux temporels sont prévus pour l'accès multiple en multiplexage dans le temps.

7. Système de télécommunication conforme à la revendication 1, caractérisé en ce que les postes émetteurs/récepteurs fixes (FS) sont raccordés à leur station de contrôle (LS) correspondante par un moyen de transmission à large bande, en particulier par un raccordement par fibres optiques.

8. Système de télécommunication conforme à l'une des revendications précédentes, caractérisé en ce que, dans chaque intervalle de temps N de la transmission par multiplexage dans le temps, l'information à transmettre est précédée d'au moins un préambule de synchronisation grâce auquel les postes émetteurs/récepteurs mobiles se synchronisent sur la trame temporelle reçue, et en ce que la transmission s'effectue par la technique d'étalement du spectre.

9. Système de télécommunication conforme à la revendication 8, caractérisé en ce que les bits à transmettre sont réunis en groupes de n bits et en ce que chaque groupe est codé en un caractère à m éléments.

10. Système de télécommunication conforme à la revendication 9, caractérisé en ce que des codes à caractères à m éléments différents sont utilisés dans des stations de contrôle (LS) voisines.

11. Système de télécommunication conforme à la revendication 9, caractérisé en ce que le code des caractères à m éléments varie suivant une séquence pseudo-aléatoire d'un groupe à l'autre pour les groupes consécutifs de n bits.

12. Système de télécommunication conforme à la revendication 9, caractérisé en ce que dans chaque intervalle de temps (N) tous les pics de corrélation du(des) préambule(s) de synchronisation sont calculés dans un ou deux corrélateurs de synchronisation (31) et en ce que m corrélateurs de caractères sont prévus lesquels sont balayés pour chaque caractère au moins aux temps correspondant aux temps des plus grands pics de corrélation du préambule.

13. Système de télécommunication conforme à la revendication 12, caractérisé en ce que le préambule de synchronisation est émis deux fois pour la détermination des pics de corrélation et le choix du plus grand pic de corrélation.

14. Système de télécommunication conforme à la revendication 12, caractérisé en ce que le préambule de synchronisation est interprété une fois sans temporisation et une fois avec temporisation pour la détermination des pics de corrélation et le choix du plus grand pic de corrélation, la détermination s'effectuant dans deux corrélateurs montés à la suite l'un de l'autre (31a, 31b).

15. Système de télécommunication conforme à la revendication 12, caractérisé en ce que, en cas de balayage répété, les valeurs de balayage sont totalisés dans les détecteurs (33) montés en aval des corrélateurs de caractères (31).

16. Système de télécommunication conforme à la revendication 15, caractérisé en ce que le balayage multiple se produit en cas d'apparition de plusieurs pics de corrélation presque identiques.

17. Système de télécommunication conforme à la revendication 15, caractérisé en ce que les valeurs du balayage sont totalisées pour les caractères à la sortie des corrélateurs (31) en étant pondérées.

18. Système de télécommunication conforme à la revendication 17, caractérisé en ce que la totalisation est effectuée par des intégrateurs (ID) qui peuvent être mis à zéro au début de chaque cycle.

19. Système de télécommunication conforme à la revendication 18, caractérisé en ce que les intégrateurs (ID) peuvent être réglés sur différentes constantes d'intégration pour la pondération des valeurs de balayage.

20. Système de télécommunication conforme à la revendication 18, caractérisé en ce que plusieurs intégrateurs ($ID_{1-4}$) qui peuvent être mis en action l'un après l'autre à des temps déterminés sont montés en parallèle.

# Fig.1

SYSTEMEBENE

⊛ = Überleiteinrichtung

▣ = Leitstelle

ZELLENEBENE

▣ = Leitstelle

■ = ortsfeste Sende/Empfangsstation

FUNKEBENE

● = bewegliche Sende/Empfangsstation

■ = ortsfeste Sende/Empfangsstation

**Fig.2**

LS_x

LS_y

MS

LS

FS

LS_z

**Fig.3**

| 1 | 2 | 3 | 4 |
| --- | --- | --- | --- |
| ▷ | A/D-WANDLER | PUFFER SPEICHER | MODULATOR |

SENDER 5

REFERENZ OSZILLATOR 16 — FREQUENZ-ERZEUGUNG 15 — S/E SCHALTER 7, 6

EMPFÄNGER 8

| 12 | 11 | 10 | 9 |
| --- | --- | --- | --- |
| ◁ | D/A-WANDLER | PUFFER SPEICHER | DEMODULATOR |

BEDIENUNG ANZEIGE 14 — MIKROPROZESSOR 13

⇨ STEUERLEITUNG

Fig. 4

STEUERLEITUNG

## Fig.5

$\frac{1}{30}$ Sekunde

| 64 | 1 | 2 | 3 | ----- | 64 | 1 | → $t$

| Sync.-Präambel | Nachrichten-Präambel | Nachricht. ca. 2130 bit | Schutz-zeit |

## Fig.6a

$t$ →

## Fig.6b

Codewort

$t$ →

## Fig.6c

$t$ →

## Fig.7

DIREKTES SIGNAL

} UMWEGSIGNAL

ENTDECKTE SIGNALE

## Fig.8

| 4-BIT-GRUPPE | | 16-CODE-ZEICHEN |
|---|---|---|
| 0000 | $\underline{\underline{1}}$ | 0000111101011001 |
| 0001 | $\underline{\underline{1}}$ | 0001111010110010 |
| 0010 | $\underline{\underline{1}}$ | 0011110101100100 |
| 0011 | $\underline{\underline{1}}$ | 0111101011001000 |
| 0100 | $\underline{\underline{1}}$ | 1111010110010000 |
| 0101 | $\underline{\underline{1}}$ | 1110101100100001 |
| 0110 | $\underline{\underline{1}}$ | 1101011001000011 |
| 0111 | $\underline{\underline{1}}$ | 1010110010000111 |
| ⋮ | | ⋮ |
| 1111 | $\underline{\underline{1}}$ | 1000011110101100 |

Fig.9

STEUERLEITUNG

Fig.10

SENDER — 5 · S/E SCHALTER — 6 · EMPFÄNGER 8 · 7 · 25 · FREQUENZ-ERZEUGUNG 15 · REFERENZ-OSZILLATOR 16 · ZF-GEN. 28 · MODULATOR 1 27 · MODULATOR N 27 · CODE 1 · CODE N · SIGNAL 1 · SIGNAL N · MULTIPLEXER 17 · PUFFER-SP. 1 18 · PUFFER-SP. N 18 · 19 · LS · DEMODULATOR CODEW.-SYNCHR. 30 · CODE 1 · CODE N · SIGNAL 1 · SIGNAL N · STEUERLEITUNG · CODE-GENERATOR 29 · MIKROPROZESSOR 13 · DEMULTIPLEXER 20 · PUFFER-SP. 1 21 · PUFFER-SP. N 21 · 1 ... N

0 064 686

Fig.11

# Fig.12

Fig.13

Fig.14

# Fig.15

Zeichenstrom des ersten Pfades

I : Integrieren

D : Nullsetzen

U : Übergabe des Integrationsergebnisses an Entscheidungsstufe 34

0 064 686

# Fig. 16

1. Pfad  2. Pfad  3. Pfad  4. Pfad  5. Pfad

relative Ankunftszeiten von Pfaden

geschlossen

offen

Schaltzustände des Schalters 45

Spannungsverlauf am

Ausgang der I & D-Stufe

geschlossen

offen

Schaltzustände des Schalters 46